# EUROPEAN PATENT APPLICATION

(11) **EP 2 325 964 A1**
(43) Date of publication of application: **25.05.2011**
(21) Application number: 09176357.3
(22) Date of filing: 18.11.2009
(51) Int. Cl.: H02G 3/14, H02B 1/26

(54) **An electric mains installation assembly and interchangeable information carrier module**

(71) Applicant: Schneider Electric Danmark A/S, 2750 Ballerup (DK)
(72) Inventor: Jensen, Per, 2770, Kastrup (DK); Jensen, Rasmus Hybler, 2300, Copenhagen S (DK)
(74) Representative: Nielsen, Kim Garsdal

(57) **Abstract**

An electrical mains installation assembly having a front surface (10) defining a first plane. The installation assembly comprises an information carrier (9). The information carrier (9) comprises a movable member comprising at least a first surface (22) and a second surface (24) adapted for carrying information, said movable member being rotary movable through an angle between a first position and a second position about an axis (A) extending in parallel with said first plane. The information carrier (9) may be part of an interchangeable information carrier module.

## Description

The present invention relates to an electrical mains installation assembly comprising an information carrier, as well as to an interchangeable information carrier.

In more general terms, the present invention relates to the marking of mains installation devices, i.e. sockets, switches, dimmers, IR-sensors etc. forming part of a mains installation using voltages so high that, specific training and authorisation is required, e.g. as an electrician in order to carry out work on the installation. In Europe such mains installations typically use 240 V, whereas in other parts of the World, e.g. the US, they typically use 120 V.

It is well known to mark such installation devices in respect of their immediate functionality, e.g. indicating the purpose of a switch to the operator, in particular because in typical installations, identical switches, identical sockets etc. are used to create an overall harmonic appearance. Thus two switches with identical appearance may have different purposes. In order to communicate such different purposes to the immediate user, switches with variable information has been suggested.

Thus, DE-U-8600623 suggest an information template which may be placed four different positions around a switch operating member to allow only one of four respective markings to be visible through a cover part, the visible one indicating the functionality of the switch.

Similarly EP-A-689216 suggest the use of an information carrier with several symbols, which may be displaced behind a window in the operating member of a switch, so as to present only a desired one in the window.

It is of course also known to use ad hoc marking, such as DYMO® strips with appropriate text directly on the operating member or the cover around it. The former is however undesirable because with the strip placed on the operating member it will be subject to frequent touching, and likely to come off over time. The latter may also present a problem because when redecorating a room, the painter will normally remove all the covers around the switch operating members or other installation devices before painting, with the distinct risk of mixing them up when refitting them after the painting.

However, painters are not the only skilled workers which are in touch with the installation devices. These have to be fitted by electricians as mentioned above.

The electrician, in turn, is not only interested in the immediate function of the switch, but has also interest in which circuit the switch belongs to in the installation board or fusebox, so as to allow him only the disconnect the least possible number of circuits in the building in order to perform his work. Having identified the particular switch connected to a lighting outlet in the ceiling where he has to install a lamp, he might for security reasons want to disconnect not the immediate connection to the lamp, but the entire circuit in the installation board to which the lamp and the switch belongs. Often the groups covered by the circuit-breakers or fuses in the fusebox are not very well identified, leaving him with the problem of having to disconnect several circuits in a trial-and-error process before identifying the correct one covering the switch to which his work relates. Not only does this cause unnecessary disturbance of circuits which should be unaffected by his work, but it also involves extra work in returning from the location of the fusebox to the switch in the trial-and-error process, or extra work from an additional person remaining to check whether the right circuit has been disconnected or not.

On this background it is the object of the present invention to provide a mains installation assembly which overcomes the above problems.

According to a first aspect of the present invention this object is achieved by an electrical mains installation assembly having a front surface defining a first plane, and said installation assembly comprising an information carrier, characterized in that said information carrier comprises a movable member comprising at least a first surface and a second surface adapted for carrying information, said movable member being rotary movable through an angle between a first position and a second position about an axis extending in parallel with said first plane.

Thereby it becomes possible to provide the installation assembly with information relevant for several situations, but only to present the information needed for a given situation. Moreover, the information of less frequent need will be hidden away in a well protected manner. The least used information, which is the information most difficult to preserve in mind, will thus not be prone to be lost during time, e.g. if an adhesive marking gets unstuck or peeled of by persons not knowing better.

According to a second aspect of the invention this object is achieved by an interchangeable information carrier module for an installation assembly, said information carrier module comprising a front surface defining a first plane, as said information carrier module comprising an information carrier, characterized in that said information carrier comprises a movable member comprising at least a first surface and a second surface adapted for carrying information, said movable member being rotary movable through an angle between a first position and a second position about an axis extending in parallel with said first plane.

This allows the advantages recited above in conjunction with the first aspect, to be implemented if a flexible way. Moreover, the interchangeability makes it possible to implement this invention in existing installations by replacing blind covers with a module according to the second aspect of the invention.

It follows that, according to one embodiment of the electrical mains installation assembly according to the first aspect of the invention movable member is held in an interchangeable module representing the second aspect of the invention.

Consequently, preferred embodiments of the invention may be implemented likewise in accordance with both the first and second aspect of invention.

In one such embodiment, said information carrier has means for retaining at least one of said first and second positions. Thus the surface with the most preferred or frequently used may be held securely against inadvertent hiding.

In another embodiment, the movable member is adapted to be released from said mains installation assembly and reengaged in said mains installation assembly after a rotation through 180 degrees about a second axis perpendicular to said first axis.

According to another preferred embodiment of the invention it comprises a detachable face plate. This allows the flush and harmonic appearance of the overall installation to be provided, while at the same time allowing the access to the aforesaid removal and reinsertion of the movable member.

The present invention will now be described in greater detail based on non-limiting exemplary embodiments, and with reference to the drawings, on which
Fig. 1 shows a partially exploded view of mains installation assembly according to the invention and comprising a switch module with two switches,
Fig. 2 shows a partially exploded view of the mains installation assembly of fig. 1 comprising an interchangeable information carrier module according to the invention, but without the switch module,
Fig. 3 shows an exploded view of the interchangeable information carrier module according to the invention,
Fig. 4a shows cross a section of the mains installation assembly in an assembled state taken long the line IV-IV in Fig. 1,
Fig. 4b shows cross a section corresponding to that of Fig 4a, but with the movable member turned slightly,
Figs. 5a-5b illustrate the process of removing and reinserting the movable member in a reversed position,
Fig. 6 shows a partially exploded view of an alternative embodiment of the installation assembly according to the invention,
Fig. 7 shows a frame and an interchangeable information carrier module forming part of a mains installation assembly according to the invention,
Fig. 8 shows an assembled view of the embodiment of Fig. 6.

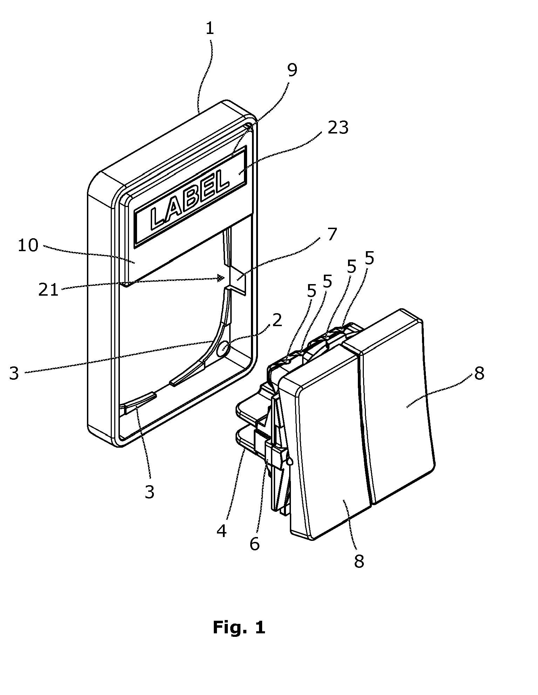

Turning first to Fig. 1 a mains installation assembly is shown. The mains installation assembly comprises a frame member 1. In the case illustrated, the frame is for flush mounting by means of screws through holes 2 in a flange 3, in connection with a mounting box (not shown) embedded in a building wall (also not shown). Alternatively, the frame 1 could be a part of a mounting box mounted on a building wall. The skilled person will understand form the following description that the specific type of mounting box is of little relevance to the invention. The mains installation assembly shown comprises an installation device in the form of a self-contained switch module 4. The switch module 4 preferably is adapted for snap acting engagement with the frame 1 so as to close the switch box after the wiring have been fitted to the switch module 4 in appropriate terminals 5. For this snap action, the switch module has protrusions 6 which engage in corresponding recesses 7 in the frame 1. The illustrated switch module 4 comprises two see-saw buttons 8, but could just as well only comprise a single see-saw button or a push button. In general it should be noted that any suitable mains installation device could be used in connection with the mains installation assembly according to the invention. A non-exhaustive list of examples could include sockets, dimmers, remote controlled switch units, IR-sensors, or even simple cover plates where wires from the fuse box terminate in unused mounting boxes.

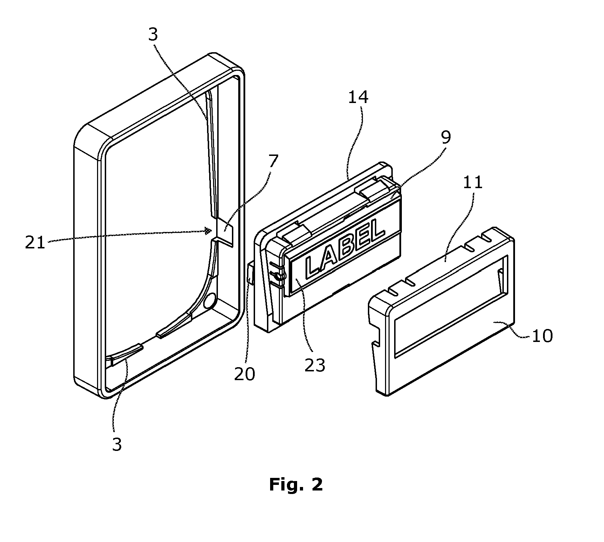

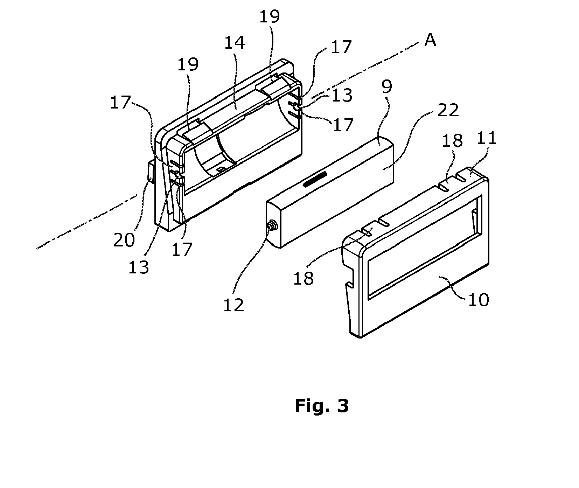

Fig. 1 furthermore shows an information carrier 9 embedded in a front surface 10. The front surface 10 may be an integral part of the frame 1, but preferably constitutes a part of a separate module or subassembly, as illustrated in Fig. 3. The front surface 10 may be an integral part of the subassembly. For reasons which will be described below it is, however, preferred that it is provided as a removable front plate 11 forming part of the subassembly of the mains installation assembly as illustrated in Fig. 2. Using a subassembly or a module allow the invention to be implemented in existing infrastructure e.g. by replacing dummy covers of the same size. It also allows the use of identical frames 1 throughout an installation, implementing the invention only in some places. Using the same frame 1 for multiple purposes evidently reduces the number of different parts that have to be manufactured and kept in stock, which in turn saves economical resources.

As can best be seen in Fig. 3 the information carrier 9 comprises two axle journals 12, i.e. one extending from each end and thus only one of them visible in Fig. 3. The two axle journals 12 are located in corresponding bearings 13 on a main body 14, allowing the information carrier to rotate about a first axis A, i.e. the longitudinal axis of the information carrier 9 extending in parallel with a first plane defined by the front surface 10 and coinciding with the bearings 13. The information carrier thus comprises a rotably journalled movable member, which may rotate through an angle about the first axis A. Each bearing 13 is formed between a pair of spring arms 17, which are preferably provided as an integral part of the main body 14 during moulding thereof. The subassembly is assembled by clicking the two axle journals 12 into the respective 13 bearings between each pair of spring arms 17, and then attaching the removable front plate 11. In the illustrated embodiment the removable front plate is attached by means of resilient arms 18 engaging behind corresponding protrusions 19 on the main body 14.

The assembled subassembly may be mounted in the mains installation assembly in the position shown in Fig. 1. This is done by inserting undercut protrusions 20 through the frame 1 via the recesses 7 and associated cut-outs 21 in the flange 3. The undercut protrusions 20 may then be slid along the flange 3 to the position of Fig. 1, thereby engaging behind the flange 3. When subsequently the switch module 4 is clicked into place, the main body 14, and thus the entire subassembly, is held securely in place.

Referring again to Fig. 3 it can be seen that the information carrier comprises a first surface 22, adapted to carry information. This adaptation principally consists in the first surface 22 being a plane surface. However, the adaptation may also be an adaptation allowing text to be written directly on the surface, plane or not, e.g. by the surface being slightly roughened. As an alternative the adaptation comprises a smooth plane surface providing a good basis for the adhesive of an adhesive label 23 as illustrated in Figs. 1 and 2. Preferably, however, the plane surface 22 has the same appearance as the front surface 10, in order to remain inconspicuous if the option of marking the mains installation device is not used or only used in part, e.g. if the only relevant information relates to the circuit in the switch box, and the user wants to hide and protect that information. Here, it should be noted that unlike the prior art of DE-U-8600623 and EP-A-689216, using predetermined markings, a label or direct writing on the information carrier 9 allows the use any text or marking at the users free choice.

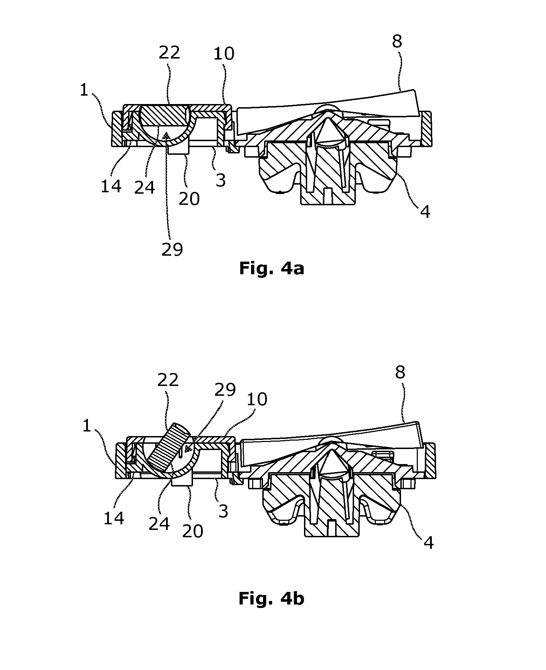

As can be seen from Fig. 4a the information carrier 9 furthermore comprises a second surface 24, also adapted to carry information, preferably in the same way as the first surface, i.e. by being plane and possibly having a surface which is roughened, smooth or preferably with the same appearance the front surface 10.

As to the label 23 it should be noted that one and the same label 23 could carry the information relevant to both switches in fig 1, or as an alternative two labels could be provided on either one of the first and second surfaces 22 or 24, e.g. side by side.

Fig. 4b illustrates the information carrier 9 during the process of being turned in a cavity 29. The information carrier is largely symmetrical, allowing it to be turned through an angle of e.g. 180 degrees about its longitudinal axis between the first position shown in Fig. 4a, where the first surface 22 is flush with the front surface 10, to a second position (not shown) where the second surface 24 is flush with the front surface 10. The information not presented on the one of the first and second surfaces 22, 24, is in that case hidden away and well protected in the cavity 29 and therefore not likely to come off, e.g. during cleaning, touching or due wilful removal by unauthorised persons.

This allows the relevant information to be readily displayed, by the user simply pressing the information carrier 9 to rotate it in order to get either the information about the functionality of the switch or the information about the relevant circuit in the fuse box. Since the movable member is freely movable, i.e. not mechanically linked to any operation of the switch module 4 or any other possible installation device inserted in the frame 1, this can be done at will, any time the user needs to access the information not currently displayed.

As to the movable member it should be noted, that it is in fact possible to provide more than two sides adapted for carrying information, e.g. three or even four. However, in installation devices it is currently considered unlikely that more three sides would make sense. Moreover with an increasing number of sides adapted for carrying information, either the volume of the movable member would increase undesirably or the flat surfaces would have to be made smaller, thus sacrificing the room for the desired information.

Though the movable member is freely movable, it may however be desirable to restrict this freedom, e.g. by having predetermined resting positions, in which it rests until a suitable external force is exerted upon it.

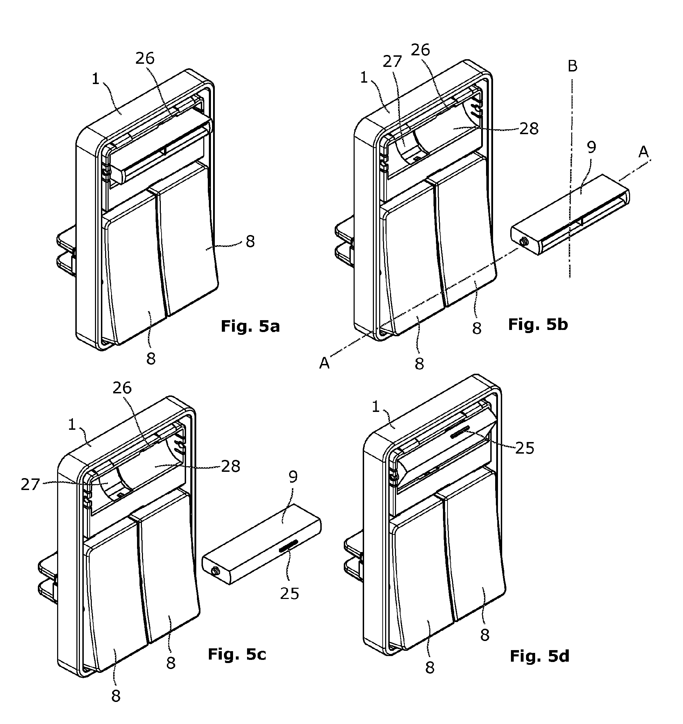

Figs. 5a-5d show the installation assembly of Fig. 1 with the removable front plate 11 removed. Here it can be seen that the information carrier 9 is preferably hollow with one or more cross sectional ribs for stability. This saves weight and material. As already mentioned, the information carrier 9 is rotably journalled about a first axis A, the first axis extending in parallel with said front surface 10 when the removable front plate 11 is refitted. As already indicated above, and as can be seen from Fig. 5b and 5c, it allows the information carrier to be removed from the bearings formed between the spring arms 17 and turned 180 degrees about a second axis B perpendicular to the first axis A. Subsequently, the information carrier 9 may then be reinserted in the bearings formed between the spring arms 17 in a reverse orientation. This, in turn, allows for a relocation of the protrusion 25 seen in Figs. 5c and 5d with respect to a notch 26 and a groove 27 provided in the wall 28 of the cavity 29. This provides the option of locking the information carrier 9 in a desired position. Thereby it also becomes optional which side of the information carrier should face inward when the information carrier 9 is retained in the first or second position. It should of course be noted that irrespective of the overall embodiment of the installation assembly, simple friction could also constitute a means for retaining the information carrier in a desired position.

This arrangement is also the reason why a removal front plate 11 is preferred over an integral 10, because the removable front plate visually hides the spring arms 17 and helps to cover the immediate access to the them, thus rendering the appearance of the installation device better and unauthorised persons less likely to tamper with the information carrier 9, except of course turning it about the first axis A.

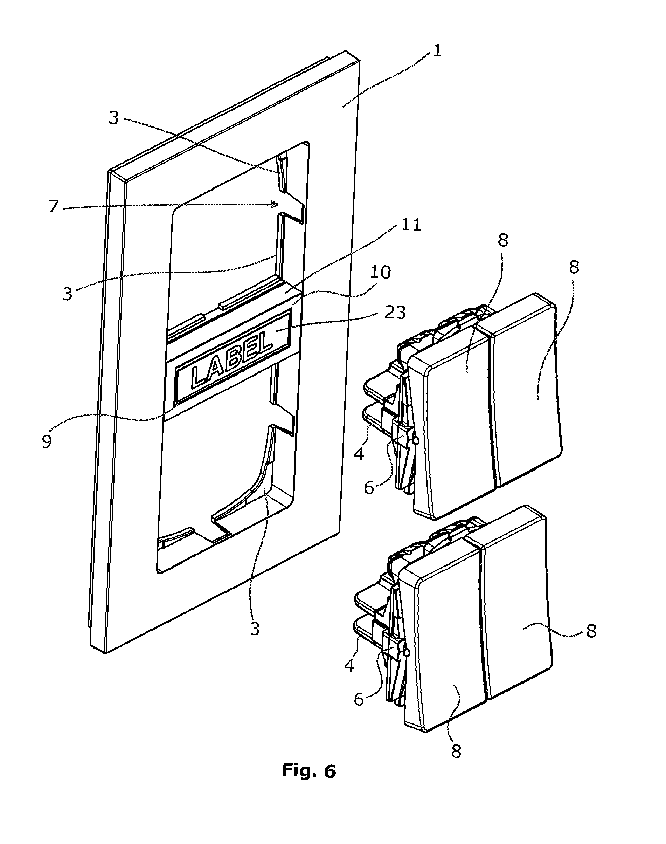

Turning now to Fig. 6 an alternative embodiment of the mains installation assembly according to the invention will be described. In this description, identical elements or elements with similar functions are denoted with same reference numerals as in the above.

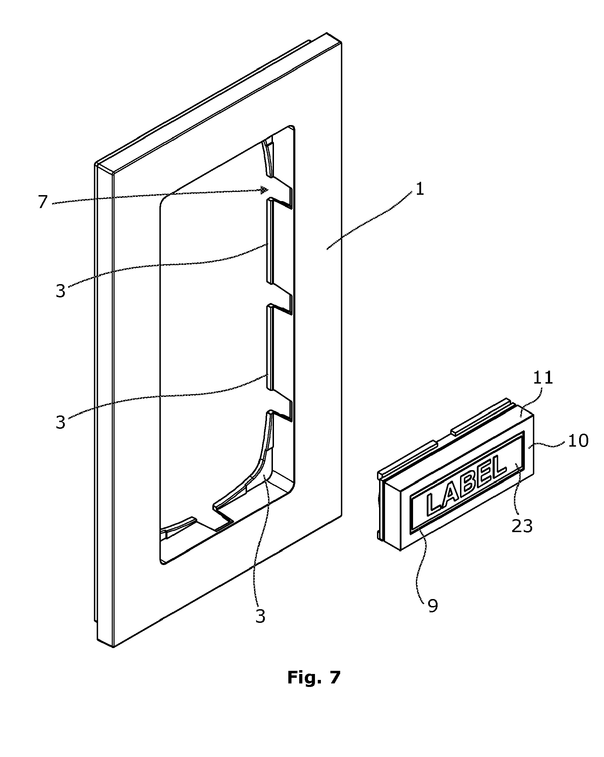

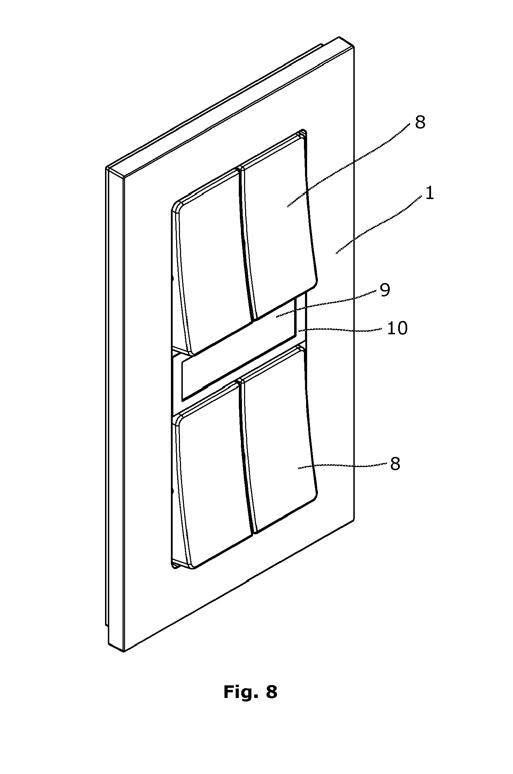

As can be seen the mains installation assembly of Fig. 6 comprises a frame 1 which is wider than that of Fig. 1. It is adapted to receive two mains installation devices illustrated as two switch modules 4, each one identical to the one use in the illustration of the first embodiment. These switch modules thus also comprise protrusions 6 allowing them to be clicked into place in the frame 1. The frame 1, however, differs slightly from that of Fig. 1 in that the recesses 7 are cut all the way through the frame 1 so that the protrusions 6 engage behind the frame 1 rather than in a recess. Centrally arranged in the frame 1 there is an information carrier 9 with a label 23. The information carrier 9 is movable about an axis (not shown) extending in parallel with the front surface 10 of a front plate 11 in the same way as in the first embodiment. The front surface 10 and the front plate may be an integral part of the frame 1, but is, as can be seen in Fig. 7, preferably a separate information carrier module, e.g. in the form of a subassembly, adapted to rest on the flanges 3 and being held in place by the switch modules 4 only, as illustrated in Fig. 8. Apart from the features relating to the engagement with the frame 1, the subassembly may be constructed exactly like the one in the first embodiment. Again, the switch modules only serve as an example of a mains installation device, and could be any one from the non-exhaustive list recited in conjunction with the first embodiment. From Fig. 8 it can furthermore be seen that in this embodiment the actual marking the information carrier on one or both sides is also only an option.

The invention has now been described based on non-limiting exemplary embodiments. The skilled person however will understand that numerous variations and modifications are possible within the scope of the claims without departing from the invention.

## Claims

1. An electrical mains installation assembly having a front surface (10) defining a first plane, and said installation assembly comprising an information carrier (9),**characterized in that** said information carrier comprises (9) a movable member comprising at least a first surface (22) and a second surface (24) adapted for carrying information, said movable member being rotary movable through an angle between a first position and a second position about a first axis (A) extending in parallel with said first plane.

2. An electrical mains installation assembly according to claim 1, wherein said information carrier (9) has means (25, 26) for retaining at least one of said first and second positions.

3. An electrical mains installation assembly according to any one of the preceding claims, wherein the movable member is held in an interchangeable module.

4. An electrical mains installation assembly according to any one of the preceding claims, wherein said movable member is adapted to be released from said mains installation assembly and reengaged in said mains installation assembly after a rotation through 180 degrees about a second axis (B) perpendicular to said first axis (A).

5. An electrical mains installation assembly according to any one of the preceding claims comprising a detachable front plate (11).

6. An interchangeable information carrier module for an installation assembly, said information carrier module comprising a front surface (10) defining a first plane and said information carrier module comprising an information carrier (9), **characterized in that** said information carrier (9) comprises a movable member comprising at least a first surface (22) and a second surface (24) adapted for carrying information, said movable member being rotary movable through an angle between a first position and a second position about a first axis extending in parallel with said first plane.

7. An interchangeable information carrier module according to claim 6, wherein said information carrier (9) has means (25, 26) for retaining at least one of said first and second positions.

8. An interchangeable information carrier module according to any one of claims 6 or 7, wherein said movable member is adapted to be released from said interchangeable information carrier module and reengaged in said interchangeable information carrier module after a rotation through 180 degrees about a second axis (B) perpendicular to said first axis (A).

9. An interchangeable information carrier module according to any one of claims 6 to 8, comprising a detachable front plate.
